# EUROPÄISCHE PATENTSCHRIFT

(11) **EP 3 191 870 B1**
(45) Veröffentlichungstag und Bekanntmachung des Hinweises auf die Patenterteilung: **18.04.2018**
(21) Anmeldenummer: 16701177.4
(22) Anmeldetag: 22.01.2016
(51) Int. Cl.: G01S 17/89, G01S 7/491

(54) **TOF ENTFERNUNGSSENSOR**
TOF DISTANCE SENSOR
CAPTEUR DE DISTANCE TOF

(30) Priorität: 09.02.2015 EP 15154379
(43) Veröffentlichungstag der Anmeldung: 19.07.2017
(73) Patentinhaber: Espros Photonics AG, 7320 Sargans (CH)
(72) Erfinder: POPP, Martin, 7000 Chur (CH)
(74) Vertreter: Otten, Roth, Dobler & Partner mbB Patentanwälte
(86) Internationale Anmeldenummer: PCT/EP2016/051296
(87) Internationale Veröffentlichungsnummer: WO 2016/128198

(56) Entgegenhaltungen:
- EP-A1- 2 743 724
- EP-A2- 2 290 393
- DE-A1- 19 821 974
- US-A1- 2009 224 139
- US-A1- 2014 145 281

## Beschreibung

Aus dem Stand der Technik sind TOF (Time of Flight) Entfernungssensoren bekannt, die die Phasenverschiebung von moduliertem Licht detektieren das auf ein Objekt ausgesandt und von diesem reflektiert wurde und die daraus die Entfernung zum Objekt ableiten.Ein Sensor nach dem Oberbegriff des Anspruchs 1 geht aus der US 2014/145281 A1 hervor.

Es ist Aufgabe der Erfindung, einen verbesserten Entfernungssensor bereit zu stellen.

Diese Aufgabe wird, ausgehend von einem Entfernungssensor der eingangs genannten Art, durch einen Entfernungssensor nach Anspruch 1 gelöst. Vorteilhafte Ausgestaltungen sind in den weiteren abhängigen Ansprüchen angegeben.

Der erfindungsgemäße Entfernungssensor ist ein TOF Entfernungssensor zur Erfassung einer Entfernung zu einem Objekt durch den Empfang von vom Objekt reflektierter Strahlung aus einer mit einer Modulationsfrequenz modulierten Strahlungsquelle. Er weist eine Pixelmatrix zur Aufnahme eines Pixelbildes auf. Die Pixelmatrix besteht aus Demodulationspixeln die zum rückseitigen Empfang der Strahlung ausgelegt sind. Die Demodulationspixel weisen einen Umwandlungsbereich zur Generation von Ladungsträgern aus der empfangenen Strahlung auf, sowie eine Trenneinrichtung zur Trennung der Ladungsträger entsprechend der Modulationsfrequenz, sowie eine Blende zur Abschottung des Umwandlungsbereichs von der Trenneinrichtung in Bezug auf die Ladungsträger und sowie eine Blendenöffnung zum Durchlass der Ladungsträger vom Umwandlungsbereich in die Trenneinrichtung. Erfindungsgemäß ist der TOF Entfernungssensor so ausgebildet, dass jeweils mindestens zwei Demodulationspixel eine gemeinsame Blendenöffnung ausbilden.

Die gemeinsame Blendenöffnung kann den Vorteil ausbilden, dass die Sensitivität der Demodulationspixel erhöht und der Entfernungssensor effektiver wird. Die gemeinsame Blendenöffnung kann auch den Vorteil aufweisen, dass die Pixelgrössen kleiner ausgestaltet werden können. Die Pixelmatrix kann den Vorteil ausbilden, Bilder, insbesondere 3-D-Bilder zu generieren.

Die Ausbildung des Demodulationspixels zum rückseitigen Empfang der Strahlung bedeutet, dass der Strahlungseinfall in den Umwandlungsbereich von der der 5 Trenneinrichtung und dem Auswertebereich abgewandten Seite erfolgt.

Vorzugsweise ist der Umwandlungsbereich dazu von einer gedünnten, z.B. 50 um dicken Halbleiterschicht gebildet, die auf ihrer Vorderseite die Trenneinrichtung etwa in CCD Technologie ausbildet.

Vorzugsweise bildet die gemeinsame Blendenöffnung einen geschlossenen Umfang aus.

Vorzugsweise weisen die Demodulationspixel jeweils einen elektronischen Auswertebereich auf, wobei jeweils mindestens zwei Demodulationspixel einen räumlich gemeinsamen Auswertebereich ausbilden.

Dies kann den Vorteil ausbilden, dass Teile des gemeinsamen Auswertebereichs gemeinsam genutzt werden und so Teile des Auswertebereichs reduziert werden können.

Vorzugsweise bilden jeweils vier Demodulationspixel eine gemeinsame Blendenöffnung aus. Vorzugsweise bilden jeweils vier Demodulationspixel einen räumlich gemeinsamen Auswertebereich aus. Vorzugsweise bilden die Blendenöffnungen und Auswertebereiche ein Schachbrettmuster aus.
Vorzugsweise ist die Pixelmatrix im Wesentlichen jeweils punktsymmetrisch zu den gemeinsamen Blendenöffnungen. Vorzugsweise ist die Pixelmatrix im Wesentlichen jeweils punktsymmetrisch zur den gemeinsamen Auswertebereichen.

Dies kann den Vorteil ausbilden, dass diejenigen Ladungsträger, die im Bereich unterhalb eines Demodulationspixels generiert wurden, zur Trenneiririchtunggenau dieses Demodulationspixels gelangen. Dies kann den Vorteil ausbilden, dass die Ladungsträger Ihre Ortsinformation in Bezug auf das einzelne Demodulationspixel behalten. Dies kann die Auflösung der Pixelmatrix erhöhen.

Vorzugsweise weist der Umwandlungsbereich ein dotiertes Substrat aus. Vorzugsweise weist der Umwandlungsbereich eine transparente Rückseitenelektrode aus. Vorzugsweise ist das Substrat ein Halbleitersubstrat. Vorzugsweise ist das Substrat schwach n - - dotiert.

Dies kann den Vorteil ausbilden, dass der Unwandlungsbereich verarmt werden kann, sodass in ihm durch Strahlung der elektrische Photoeffekt ausgebildet werden kann.

Vorzugsweise weist die Trenneinrichtung ein Driftgate auf der Oberseite des Substrats zur Anziehung der Ladungsträger aus dem Umwandlungsbereich in den Trennbereich auf. Vorzugsweise kann das Driftgate auch durch mehrere Driftgates gebildet sein, die insbesondere zu den Modulationsgates hin ein immer stärkeres Potential zu Anziehung der Ladungsträger aufweisen. Vorzugsweise kann ein Driftgate so ausgebildet sein, dass zwei Modulationsgates an gegenüberliegenden Stellen angeordnet werden können. Gegebenenfalls kann das Driftgate durch das oder die Modulationsgates mit ausgebildet sein, etwa, wenn das oder die Modulationsgates mit einem zusätzlichen, konstanten Potential analog dem Driftgate beaufschlagt werden.

Vorzugsweise weist die Trenneinrichtung mindestens ein, insbesondere zwei Modulationsgates auf der Oberseite des Substrats auf, insbesondere an gegenüberliegenden Stellen des Driftgates, zur abwechselnden Lenkung der Ladungsträger entsprechend der Modulationsfrequenz vom Driftgate hin zu den Modulationsgates.

Vorzugsweise weist die Trenneinrichtung mindestens ein, insbesondere zwei Storagegates auf der Oberseite des Substrats auf, jeweils dem eine oder einem Modulationsgate zugeordnet, zur Sammlung der zu dem zugeordneten Modulationsgate hin gelenkten Ladungsträger.

Vorzugsweise weist die Trenneinrichtung mindestens ein, insbesondere zwei Transfergates auf der Oberseite des Substrats auf, jeweils dem einen oder einem Storagegate zugeordnet, zur stossweisen Weitergabe der an den Storagegates gesammelten Ladungsträger an Floating Diffusions.

Vorzugsweise weist die Trenneinrichtung mindestens ein, insbesondere zwei Floating Diffusions in der Oberseite des Substrats auf, insbesondere als n+ dotiertes Well, jeweils dem einen oder einem Transfergate zugeordnet, zur Aufnahme der von den Transfergates weitergegebenen Ladungsträger und zur Einspeisung derselben als Spannung in den Auswertebereich.

Vorzugsweise sind die genannten Gates vom Substrat durch eine nicht leitende Schicht getrennt. Vorzugsweise bilden die Demodulationspixel zwischen Blende und Gates, insbesondere zwischen Blende und Modulationsgate, Storagegate und Transfergate einen durch die Gates steuerbaren Leitungskanal für die Ladungsträger aus. Vorzugsweise steuern die Gates die Ladungsträger im Leitungskanal nach Art eines CCD. Der Leitungskanal kann eine sinnvolle Rückseitenbeleuchtung ermöglichen, die die Effizienz des Demodulationspixels erhöht. Erdfindungsgemäß weist die Trenneinrichtung ein Driftgate zur Anziehung der Ladungsträger aus dem Umwandlungsbereich in den Trennbereich auf, wobei die eine gemeinsame Blendenöffnung ausbildenden Demodulationspixel jeweils mindestens ein gemeinsames Driftgate ausbilden. Vorzugsweise überdeckt das gemeinsame Driftgate den Bereich der gemeinsamen Blendenöffnung mit im Wesentlichen gleicher Ausdehnung-Erfingdungsgemäß wird das gemeinsame Driftgate durch ein dem einzelnen Pixel individuell zugeordnetes Driftgate ergänzt das gemäß Anspruch 1 angeordnet und beaufschlagt ist. Vorzugsweise sind die Modulationsgates einem individuell zugeordneten Driftgate zugeordnet. Vorzugsweise besteht das gemeinsame Driftgate aus mehreren gemeinsamen Driftgates.

Dies kann den Vorteil ausbilden, dass der TOF Entfernungssensor noch effizienter wird.

Vorzugsweise weist die Blende einen vergrabenen Layer im Substrat auf. Vorzugsweise ist der vergrabene Layer ein p+ dotierter pSub Layer.

Dies kann den Vorteil ausbilden, dass die generierten Elektronen zuverlässig vom Layer blockiert werden.

Vorzugsweise bildet die Blendenöffnung eine geschlossene Ausnehmung aus.

Dies kann den Vorteil ausbilden, dass die Pixelgrösse besonders klein gestaltet werden kann.

Der Junction FET Effekt kann dazu führen, dass die Blendenöffnung in Bezug auf die Substratdicke nicht beliebig klein ausgebildet werden kann. Durch die Zusammenlegung zu einer gemeinsamen Blendenöffnung kann die Pixelgrösse bei gegebener Mindestöffnung kleiner gestaltet werden als bei individuellen Blendenöffnungen.

Vorzugsweise weist der Auswertebereich mindestens einen Source Follower, Reset Switch und Select Transisor auf.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: ein TOF Entfernungsensor System samt Objekt
- Fig. 2: ein Demodulationspixel im schematischen Seitenschnitt
- Fig. 3: ein Demodulationspixel in Draufsicht
- Fig. 4: vier Demodulationspixel mit gemeinsamer Blendenöffnung
- Fig. 5: eine Pixelmatrix aus 6x6 Demodulationspixeln

Detaillierte Beschreibung der Zeichnungen:

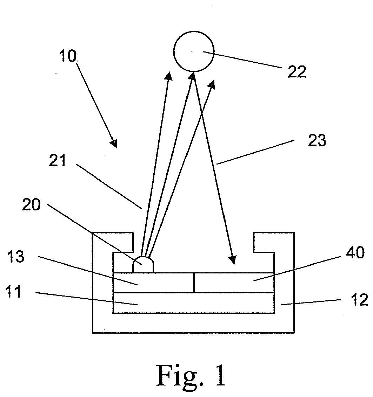

Fig. 1 zeigt ein TOF Entfernungsensor System 10 samt Objekt 22.

Das Objekt 22 ist vom TOF Entfernungssensor System 10 beabstandet. Die Strahlungsquelle 20 ist beispielsweise eine LED oder eine Anordnung von mehreren LEDs. Die Strahlungsquelle wird von der Elektronikeinrichtung 13 angesteuert, welche die Strahlungsquelle mit einer Modulationsfrequenz intensitätsmoduliert betreibt. Die Strahlungsquelle sendet beispielsweise monochromatisches Licht 21 aus, welches am Objekt diffus reflektiert wird und als reflektierte Strahlung 23 auf den TOF Entfernungssensor 40 trifft. Die empfangene Strahlung erzeugt in dem TOF Entfernungssensor einen Werteverlauf an induzierten Photoelektronen und damit einen Signalverlauf für die empfangene Strahlung.

Die Elektronikeinrichtung 13 und der TOF Entfernungsensor 10 sind auf einem Chip integriert und in einem kombinierten CMOS/CCD Verfahren ausgeführt. Der

Chip und die Strahlungsquelle 20 sind an einem gemeinsamen Träger 11 angeordnet und von einem Gehäuse 12 umgeben. Die Strahlungsquelle und die Empfangseinrichtung weisen jeweils eine in der Figur nicht dargestellte Optikeinrichtung auf, die in Richtung des Raumes fokussiert, in dem die Entfernung von Objekten bestimmt werden soll.

Die ausgesandte Strahlung 21 weist eine Wellenlänge von 860 nm auf und ist mit einem Sinussignal oder Rechtecksignal von 20 MHz gepulst. Die vom TOF Entfernungsensor 10 empfangene reflektierte Strahlung bleibt mit einem Sinussignal oder Rechtecksignal von 20 MHz gepulst und ist gegenüber dem Modulationssignal der von der Strahlungsquelle 20 ausgesendeten Strahlung um die Zeit des Lichtweges phasenverschoben. Die Phasenverschiebung zwischen ausgesendetem und empfangenem Rechtecksignal entspricht der doppelten Entfernung zwischen TOF Entfernungsensor und Objekt.

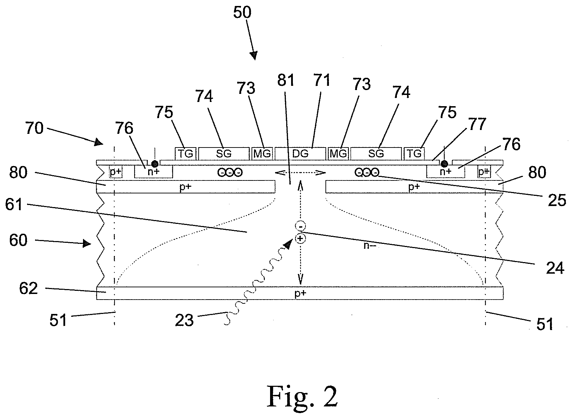

Fig. 2 zeigt ein Demodulationspixel 50 im schematischen Seitenschnitt.

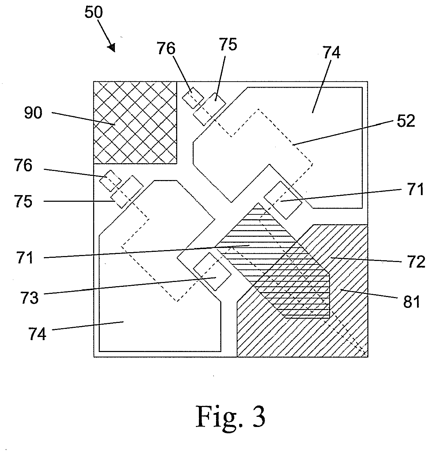

Der Seitenschnitt folgt in nicht proportionaler Weise der Schnittlinie 52 der
Draufsicht der Fig. 3.

Das Demodulationspixel 50 weist ein etwa 50 Mikrometer dickes, n-dotiertes Float Zone Silizium Halbleitersubstrat 61 auf mit einem spezifischen elektrischen Flächenwiderstand von grösser oder gleich 2000 Ohm cm. An der Oberfläche des Halbleitersubstrats ist oberhalb einer nicht leitenden SiO Trennschicht 77 auf dem Substrat ein Driftgate 71 und beidseitig in symmetrischer Anordnung und jeweils voneinander mit Abstand jeweils ein Modulationsgate 73, ein Storagegate 74, ein Transfergate 75 und innerhalb des Substrats eine Floating Diffusion 76 angeordnet. Die dazu sinnvollen Layer und Kontakte sind nicht dargestellt. Eine Blende 80 ist zwischen den Gates und dem transparenten Rückseitenkontakt angeordnet und schattet die Storagegates, Transfergates und die Floating Diffusion samt dem unter den jeweiligen Gates liegenden Halbleitersubstrat gegenüber der einfallenden reflektierten Strahlung 23 ab, wobei die Blende eine Blendenöffnung 81 im Bereich unterhalb des Driftgates aufweist. Das Halbleitersubstrat ist mindestens unter dem Driftgate, insbesondere insgesamt verarmt. Das Driftgate ist mit positivem Potential beaufschlagt und bildet im Halbleitersubstrat eine Raumladungszone aus.

Die Trenneinrichtung 70 umfasst das Driftgate, die Modulationsgates, die Storagegates, die Transfergates, die Trennschicht, die Floating Diffusions, die Blende, die Blendenöffnung sowie das zwischen Blende und den Gates befindliche Substrat, das von gleicher Art ist wie das Halbleitersubstrat 61 im Umwandlungsbereich 60. Der Umwandlungsbereich 60 umfasst das 5 Halbleitersubstrat 61, die Rückseitenelektrode 62, und die Blende 80. Das Substrat weist eine Dicke von etwa 50 Mikrometer auf.

Die über die transparente Rückseitenelektrode 62 in das Halbleitersubstrat 61 unter dem Driftgate eindringende reflektierte IR Strahlung 23 induziert im Halbleitersubstrat Elektronen-Lochpaare 24. Die Photoelektronen werden durch die vom Driftgate 71 ausgebildete Raumladungszone zum Driftgate hin angezogen. Das Driftgate weist ein Potential von etwa 4 V auf. Die Anzahl der angezogenen Photoelektronen ist proportional der empfangenen Strahlungsintensität.

Die Modulationsgates 73 können mit einem modulierten Potential beaufschlagt sein dessen Maximum zwischen den Potentialen des Driftgates 71 und des Storagegate 74 liegt und dessen Minimum unter dem des Driftgates liegt. Das Potential des Modulationsgates 73 moduliert etwa zwischen den Werten 0 V und 5 V.

Die beiden Modulationsgates sind zueinander mit inversen Potentialen 20 betrieben, das heisst, dass das Potential des einen Modulationsgates 0 V ist, wenn das des anderen positiv ist und umgekehrt. Dann ist stets das eine Modulationsgate mit 0 V und das andere Modulationsgate mit 5 V Potential versehen. Ein Potentialminimum, hier also 0 V, führt zu einer Potentialbarriere für die Photoelektronen unter dem Driftgate, sodass keine Photoelektronen zum diesen Modulationsgate zugeordneten Storagegate gelangen können. Ein Potentialmaximum, hier also 5 V, führt zu einem Abfluss der Photoelektronen unter dem Driftgate an diesem Modulationsgate vorbei in dessen zugeordnete Storagegate.

Durch die Beaufschlagung der beiden Modulationsgates mit jeweils einem Potential das jeweils zueinander inversen Sinussignalen oder Rechtecksignalen entspricht, wird der Fluss der durch die empfangene Strahlungsintensität erzeugten Photoelektronen entsprechend einer Weiche gelenkt. Der so entstehende Fluss dieser Photoelektronen unter den Modulationsgates entspricht einer Multiplikation, das heisst einer Korrelation der entsprechenden Sinussignale oder Rechtecksignale mit dem empfangenen Strahlungssignal. Die Sinussignale oder Rechtecksignale haben hier die Eigenschaft eines korrelierenden Signals und sind hier als Korrelationssignal bezeichnet.

Die Storagegates 74 sind mit einem höheren Potential als das Driftgate 71 beaufschlagt und sammeln die Photoelektronen 25 entsprechend dem Status der Modulationsgates 73 wechselseitig unter sich. Die Storagegates 74 haben etwa das Potential 10 V. Die unter den Storagegates durch die Photoelektronen angesammelten Ladungen entsprechen den Korrelationswerten. Die Korrelationswerte liegen somit in der Ladungsdomäne vor. Die Ansammlung der Photoelektronen unter den entsprechenden Storagegates entspricht einer zeitlichen Integration der oben erwähnten Korrelation von Korrelationssignal und empfangenen Strahlungssignal.

Zur Detektion der unter den Storagegates 74 angesammelten Photoelektronen 25 wird zum einen das Potential der Modulationsgates 73 auf 0 V gelegt, um eine Potentialbarriere für die Photoelektronen in Richtung Driftgate 71 zu bilden. Zum anderen wird das Potential der Transfergates auf einen mittleren Wert angehoben, beispielsweise 6 V, um einen bedingten Abfluss der Photoelektronen in Richtung Floating Diffusions 76 zu ermöglichen.

Nun wird das positive Potential beider Storagegates 74 von etwa 10 V mittels einer Zeitrampe parallel abgesenkt. Das sich dabei verändernde addierte Potential aus dem sinkenden an die Storagegates angelegten positiven Potential und dem negativen Potential der darunter befindlichen Ladung bestimmt, ob Ladung über die Transfergates 75 abfliessen kann. Der Absenkprozess teilt sich dabei in drei Phasen ein. In einer ersten Phase der Zeitrampe ist das genannte addierte Potential noch für beide Storagegates positiver als das konstant und gleich positive Potential 25 der Transfergates und es fliest keine Ladung ab. In einer anschliessenden zweiten Phase der Zeitrampe ist das genannte addierte Potential für ein Storagegate positiver und für das andere Storagegate negativer als das konstant und gleich positive Potential der Transfergates. Dadurch fliesst Ladung unter dem Storagegate mit dem positiveren addierten Potential über das zugeordnete Transfergate in die zugeordnete Floating Diffusion ab, sodass das addierte Potential wieder gleich dem Potential des entsprechenden Transfergates ist. In einer abschliessenden dritten Phase der Zeitrampe sind die genannten addierten Potentiale beider Storagegates höher als die konstant gleichen Potentiale. Dadurch fliessen unter beiden Storagegates Ladungen über das jeweils zugeordnete Transfergate in die jeweils zugeordnete Floating Diffusion ab. Unmittelbar mit Beginn der dritten Phase wird die Zeitrampe gestoppt, d.h. das Potential der Storagegates wird nicht weiter abgesenkt, sodass im Wesentlichen nur der Ladungsabfluss aus der zweiten Phase relevant ist. Die nun im einen geladenen Floating Diffusion vorliegende Ladungsmenge entspricht somit der Differenz der Ladungsmenge aus den beiden Storagegates. Die Zeitrampe führt also eine Subtraktion der Ladungsmengen unter den beiden Storagegates durch.

Die Ladungsmenge der einen geladenen Floating Diffusion entspricht nach Durchführung der oben beschriebenen Zeitrampe einem Wert der Phasendifferenz zwischen ausgesandter Strahlung 21 und reflektierter Strahlung 23.

Die Ladungsmenge der einen geladenen Floating Diffusion wird nun mittels Source Follower in eine entsprechende Spannung gewandelt und weiter verarbeitet. Der Source Follower ist Teil des Auswertebereichs des Demodulationspixels. Der Auswertbereich umfasst neben dem Source Follower auch noch einen Reset Switch und einen Selekt Transistor.

Aus der entsprechenden Spannung kann über ein Verfahren der Abstand zum Objekt berechnet werden. Ein solches Verfahren ist etwa in EP 2 743 724 A1 des Anmelders beschrieben.

Fig. 3 zeigt ein Demodulationspixel 50 in Draufsicht. Die Blendenöffnung 81 ist 20 vom etwa gleichförmigen ersten Driftgate 72 überdeckt. Ein zweites Driftgate 71 überschneidet sich elektrisch getrennt mit dem ersten Driftgate. Das zweite und das erste Driftgate wirken wie ein einziges Driftgate, wobei das zweite Driftgate mit einem höheren Potential als das erste Driftgate beaufschlagt ist, sodass Photoelektronen vom ersten zum zweiten. Driftgate weitergeführt werden. Das Demodulationspixel weist zwei Modulationsgates 73 an gegenüber liegenden Stellen an einem Ende des zweiten Driftgates auf. Dem zweiten Driftgate gegenüber liegend ist jeweils ein Storagegate 74 neben den Modulationsgates angeordnet. An einem Rand der Storagegates ist jeweils ein Tranfergate 75 angeordnet. Den Storagegates gegenüber liegend ist jeweils eine Floating Diffusion 76 neben den Transfergates angeordnet. Die Floating Diffusions sind mit dem Auswertebereich und dessen Source Follower verbunden.

Die Schnittlinie 52 zeigt den schematischen, nicht proportionalen Verlauf des Seitenschnitts der Fig. 2.

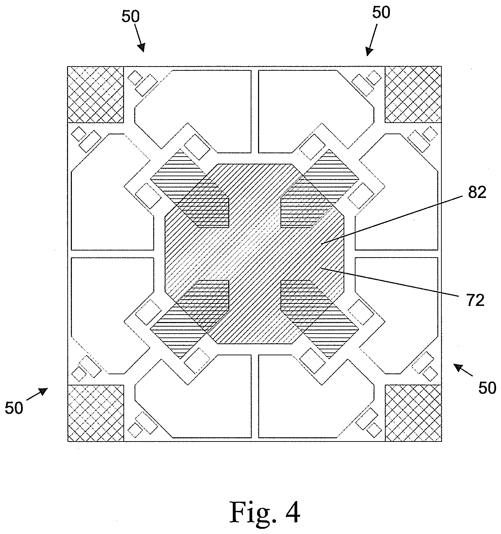

Fig. 4 zeigt vier Demodulationspixel 50 mit gemeinsamer Blendenöffnung 82. Die um die gemeinsame Blendenöffnung 82 angeordneten Demodulationspixel 50 entsprechen genau dem in Fig. 3 gezeigten Demodulationspixel 50 und sind jeweils um 90° verdreht. Der gemeinsamen Blendenöffnung 82 ist ein gemeinsames zentrales Driftgate 72 formgleich überlagert. Geometrisch gleiche Zeichenobjekte entsprechen den entsprechenden Einrichtungen von Fig. 3.

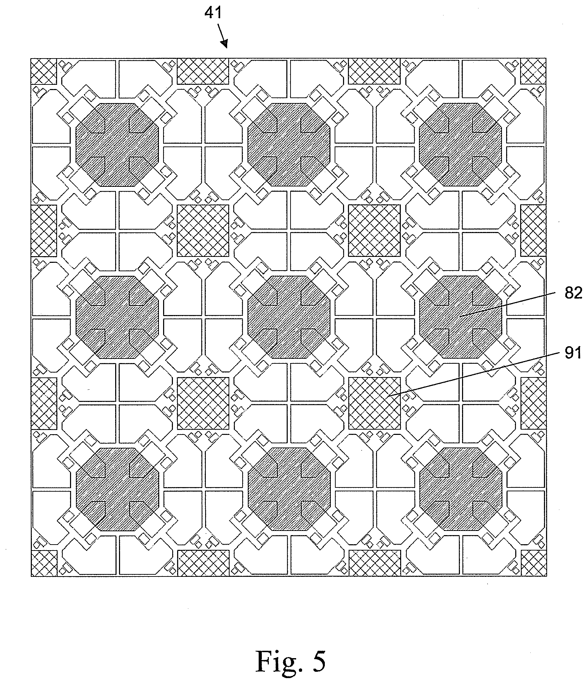

Fig. 5 zeigt eine Pixelmatrix 41 aus 6x6 Demodulationspixeln 50. Neben der gemeinsamen Blendenöffnung 82 bildet die Anordnung auch gemeinsame Auswertebereiche 91 aus. Den gemeinsamen Blendenöffnungen 82 ist jeweils ein gemeinsames zentrales Driftgate überlagert. Geometrisch gleiche Zeichenobjekte entsprechen den entsprechenden Einrichtungen von Fig. 4.

### Referenzen:

Ein Verfahren zur Auswertung des TOF Entfernungssensors ist in Dieter Huber, Markus Ledergerber, EP 2 743 724 A1 des gleichen Anmelders beschrieben.

Ein anderes Verfahren zur Auswertung des TOF Entfernungssensors ist beschrieben in Robert Lange, Peter Seitz, Alice Biber, Stefan Lauxtermann: Demodulation Pixels in CCD and CMOS Technologies for Time-of-Flight Ranging, IST/SPIE International Symposium on Electronic Imaging, Conference on Sensors, Cameras, and Systems for Scientific/Industrial Applications II, Proc. SPIE, Vol. 3965A, San Jose, USA, 24th-25th January 2000

Die Rückseitenelektrode kann mittels Potentialtunnel durch das Halbleitersubstrat 61 kontaktiert sein. Eine Vorrichtung zur Kontaktierung der Rückseitenelektrode 62 des TOF Entfernungssensors mittels Potentialtunnel ist in Martin Popp, Beat De Coi, Marco Annese, US 8,901,690 B2 des gleichen Anmelders beschrieben.

Die Demodulationspixel können in analoger CCD Technologie und die Auswertebereiche können in digitaler CMOS Technologie ausgeführt sein. Ein Verfahren zur gemeinsamen Herstellung von Demodulationspixeln (CCD) und von Auswertebereich (CMOS) ist in Martin Popp, Beat De Coi, Marco Annese, US 8,802,566 B2 des gleichen Anmelders beschrieben.

Eine Art zur gemeinsamen Ausführung von Demodulationspixeln (CCD, analog) und Auswertebereich (CMOS, digital) auf einem Chip als System on Chip ist in De Coi, Martin Popp, EP 2 618 180 B1 des gleichen Anmelders beschrieben.

### Bezugszeichenliste:

- 10: TOF Entfernungsensor System
- 11: Träger
- 12: Gehäuse
- 13: Elektronikeinrichtung

- 20: Strahlungsquelle
- 21: Ausgesandte Strahlung
- 22: Objekt
- 23: Reflektierte Strahlung
- 24: Elektronen-Lochpaare
- 25: Photoelektronen

- 40: TOF Entfernungssensor
- 41: Pixelmatrix

- 50: Demodulationspixel
- 51: Grenze
- 52: Schnittlinie
- 60: Umwandlungsbereich
- 61: Halbleitersubstrat
- 62: Rückseitenelektrode
- 70: Trenneinrichtung
- 71: Driftgate
- 72: gemeinsames Driftgate
- 73: Modulationsgate
- 74: Storagegate
- 75: Transfergates
- 76: Floating Diffusions
- 77: Trennschicht
- 80: Blende
- 81: Blendenöffnung
- 82: Gemeinsame Blendenöffnung
- 90: Auswertebereich
- 91: Gemeinsamer Auswertebereich

## Patentansprüche

1. TOF Entfernungssensor (40)
- zur Erfassung einer Entfernung zu einem Objekt (22)
- durch den Empfang von vom Objekt reflektierter Strahlung (23)
- einer mit einer Modulationsfrequenz modulierten Strahlungsquelle (20)
- mit einer Pixelmatrix (41) zur Aufnahme eines Pixelbildes
- aus Demodulationspixeln (50)
- zum rückseitigem Empfang der Strahlung mit jeweils
- einem Umwandlungsbereich (60)
- zur Generation von Ladungsträger (25) aus der empfangenen Strahlung,
- einer Trenneinrichtung (70)
- zur Trennung der Ladungsträger nach der Modulationsfrequenz,
- einer Blende (80)
- zur Abschottung des Umwandlungsbereichs von der Trenneinrichtung in Bezug auf die Ladungsträger und
- mit einer Blendenöffnung (81)
- zum Durchlass der Ladungsträger vom Umwandlungsbereich in die Trenneinrichtung
wobei
- jeweils mindestens zwei Demodulationspixel eine gemeinsame Blendenöffnung (82) ausbilden, **dadurch gekennzeichnet**,
- die Trenneinrichtung ein Driftgate zur Anziehung der Ladungsträger aus dem Umwandlungsbereich in den Trennbereich aufweist und
- dass die eine gemeinsame Blendenöffnung ausbildenden Demodulationspixel
- jeweils mindestens ein gemeinsames (72) und ein individuell zugeordnetes Driftgate (71) ausbilden, wobei das individuell zugeordnete Driftgate 71 sich elektrisch getrennt mit dem gemeinsamen Driftgate überschneidet, und das individuell zugeordnete und das gemeinsame Driftgate wie ein einziges Driftgate wirken, wobei das individuell zugeordnete Driftgate mit einem höheren Potential als das gemeinsame Driftgate beaufschlagt ist, sodass Photoelektronen vom gemeinsamen zum individuell zugeordneten Driftgate weitergeführt werden.

2. TOF Entfernungssensor nach Anspruch 1,
**dadurch gekennzeichnet, dass**
- die gemeinsame Blendenöffnung einen geschlossenen Umfang ausbildet.

3. TOF Entfernungssensor nach einem der vorhergehenden Ansprüche, **dadurch gekennzeichnet, dass**
- die Demodulationspixel jeweils einen elektronischen Auswertebereich (90) aufweisen und dass
- jeweils mindestens zwei Demodulationspixel einen räumlich gemeinsamen Auswertebereich (91) ausbilden.

4. TOF Entfernungssensor nach einem der vorhergehenden Ansprüche, **dadurch gekennzeichnet, dass**
- jeweils vier Demodulationspixel eine gemeinsame Blendenöffnung ausbilden und dass
- jeweils vier Demodulationspixel einen räumlich gemeinsamen Auswertebereich ausbilden,
- sodass insbesondere die Blendenöffnungen und Auswertebereiche ein Schachbrettmuster ausbilden.

5. TOF Entfernungssensor nach einem der vorhergehenden Ansprüche, **dadurch gekennzeichnet, dass**
- dass der Umwandlungsbereich (60) gebildet ist aus
- einem dotierten Substrat (61),
- insbesondere aus einem n- dotiertem Halbleiter-Substrat, und/oder
- einer transparenten Rückseitenelektrode (62)
- zur Verarmung des Substrats.

6. TOF Entfernungssensor nach einem der vorhergehenden Ansprüche, **dadurch gekennzeichnet, dass**
- die Trenneinrichtung (70) aufweist
- mindestens ein Driftgate (71)
- auf der Oberseite des Substrats (61)
- zur Anziehung der Ladungsträger (25) aus dem Umwandlungsbereich (60) in die Trenneinrichtung (70) und/oder
- mindestens ein, insbesondere zwei Modulationsgates (73)
- auf der Oberseite des Substrats
- insbesondere an gegenüberliegenden Stellen des Driftgates
- zur abwechselnden Lenkung der Ladungsträger entsprechend der Modulationsfrequenz vom Driftgate hin zu den Modulationsgates, und/oder
- mindestens ein, insbesondere zwei Storagegates (74)
- auf der Oberseite des Substrats
- jeweils einem Modulationsgate zugeordnet
- zur Sammlung der zu dem zugeordneten Modulationsgate hin gelenkten Ladungsträger, und/oder
- mindestens ein, insbesondere zwei Transfergates (75)
- auf der Oberseite des Substrats
- jeweils einem Storagegate zugeordnet
- zur stossweisen Weitergabe der an den Storagegates gesammelten Ladungsträger an Floating Diffusions, und/oder
- mindestens ein, insbesondere zwei Floating Diffusions (76)
- in der Oberseite des Substrats
- insbesondere als n+ dotiertes Well
- jeweils einem Transfergate zugeordnet
- zur Aufnahme der von den Transfergates weitergegebenen Ladungsträger und
- zur Einspeisung derselben als Spannung in den Auswertebereich
- wobei insbesondere die Gates vom Substrat durch eine nicht leitende Schicht (77) getrennt sind.

7. TOF Entfernungssensor nach einem der vorhergehenden Ansprüche, **dadurch gekennzeichnet, dass**
- dass die Blende (80) einen vergrabenen Layer im Substrat aufweist,
- insbesondere eine durch einen p+ dotierten pSub Layer.

8. TOF Entfernungssensor nach einem der vorhergehenden Ansprüche, **dadurch gekennzeichnet, dass**
- dass ein Auswertebereich (90) im Demodulationspixel ausgebildet ist, mit
- Source Follower,
- Reset Switch,
- Select Transistor.

9. TOF Entfernungssensor nach einem der vorhergehenden Ansprüche, **dadurch gekennzeichnet, dass**
- dass die Trenneinrichtung einen Leitungskanal ausbildet.

10. TOF Entfernungssensor nach Anspruch 6, **dadurch gekennzeichnet, dass**
- dass die Trenneinrichtung einen Leitungskanal zwischen Blende und Modulationsgate und/oder Storagegate und/oder Transfergate ausbildet
- und dass die Blende insbesondere durch einen im Substrat vergrabenen Layer gebildet wird.

## Claims

1. A TOF distance sensor (40)
- for detecting a distance to an object (22)
- by reception of radiation (23) reflected from the object
- from a radiation source (20) modulated with a modulation frequency
- comprising a pixel matrix (41) for capturing a pixel image
- of demodulation pixels (50)
- for rear-side reception of the radiation with in each case
- a conversion region (60)
- for generating charge carriers (25) from the received radiation,
- a separation device (70)
- for separating the charge carriers by modulation frequency,
- a stop (80)
- for partitioning the conversion region from the separation device in respect of the charge carriers and
- comprising a stop aperture (81)
- for passage of the charge carriers from the conversion region into the separation device,
- at least two demodulation pixels in each case forming a common stop aperture (82), **characterised in that**
- the separation device comprises a drift gate for attracting the charge carriers from the conversion region into the separation region and
- **in that** the demodulation pixels which form a common stop aperture
- in each case form at least one common (72) and one individually assigned drift gate (71), wherein the individually assigned drift gate 71 overlaps the common drift gate in electrically isolated manner, and the individually assigned and common drift gates act as a single drift gate, wherein a higher potential is applied to the individually assigned drift gate than to the common drift gate, such that photoelectrons are guided onward from the common to the individually assigned drift gate.

2. The TOF distance sensor according to claim 1,
**characterised in that**
- the common stop aperture forms a closed circumference.

3. The TOF distance sensor according to one of the preceding claims, **characterised in that**:
- the demodulation pixels each comprise an electronic evaluation region (90) and **in that**
- at least two demodulation pixels in each case form a spatially common evaluation region (91).

4. The TOF distance sensor according to one of the preceding claims, **characterised in that**:
- four demodulation pixels in each case form a common stop aperture and **in that**
- four demodulation pixels in each case form a spatially common evaluation region,
- such that the stop apertures and evaluation regions in particular form a chequerboard pattern.

5. The TOF distance sensor according to one of the preceding claims, **characterised in that**:
- the conversion region (60) is formed from
- a doped substrate (61),
- in particular from an (n-) doped semiconductor substrate, and/or
- a transparent rear-side electrode (62)
- for depleting the substrate.

6. The TOF distance sensor according to one of the preceding claims, **characterised in that**:
- the separation device (70) comprises
- at least one drift gate (71)
- on the upper side of the substrate (61)
- for attracting the charge carriers (25) from the conversion region (60) into the separation device (70) and/or
- at least one, in particular two modulation gates (73)
- on the upper side of the substrate
- in particular in opposing positions of the drift gate
- for alternately directing the charge carriers in accordance with the modulation frequency from the drift gate towards the modulation gates, and/or
- at least one, in particular two storage gates (74)
- on the upper side of the substrate
- in each case assigned to a modulation gate
- for collecting the charge carriers directed towards the assigned modulation gate, and/or
- at least one, in particular two transfer gates (75)
- on the upper side of the substrate
- in each case assigned to a storage gate
- for intermittent forwarding of the charge carriers collected at the storage gates to floating diffusions, and/or
- at least one, in particular two floating diffusions (76)
- in the upper side of the substrate
- in particular as an n+ doped well
- in each case assigned to a transfer gate
- for receiving the charge carriers forwarded by the transfer gates and
- for feeding same as voltage into the evaluation region
- wherein in particular the gates are separated from the substrate by a non-conductive layer (77).

7. The TOF distance sensor according to one of the preceding claims, **characterised in that**:
- the stop (80) comprises a buried layer in the substrate,
- in particular a p+ doped pSub layer.

8. The TOF distance sensor according to one of the preceding claims, **characterised in that**:
- an evaluation region (90) is formed in the demodulation pixel, comprising a
- source follower,
- reset switch,
- select transistor.

9. The TOF distance sensor according to one of the preceding claims, **characterised in that**:
- the separation device forms a conduction channel.

10. The TOF distance sensor according to claim 6, **characterised in that**
- the separation device forms a conduction channel between stop and modulation gate and/or storage gate and/or transfer gate
- and **in that** the stop is in particular formed by a layer buried in the substrate.

## Revendications

1. Capteur de distance TOF (40)
- destiné à déterminer un éloignement par rapport à un objet (22)
- par la réception d'un rayonnement (23) réfléchi par l'objet
- provenant d'une source de rayonnement (20) modulée en fréquence de modulation
- comprenant une matrice de pixels (41) pour l'enregistrement d'une image de pixels
- de pixels de démodulation (50)
- pour la réception côté arrière du rayonnement avec respectivement
- une zone de conversion (60)
- pour la génération de porteurs de charge (25) à partir du rayonnement reçu,
- un dispositif de séparation (70)
- pour la séparation des porteurs de charge selon la fréquence de modulation,
- un diaphragme (80)
- pour le cloisonnement de la zone de conversion par rapport au dispositif de séparation par rapport aux porteurs de charge et
- avec une ouverture de diaphragme (81)
- destinée à laisser passer les porteurs de charge depuis la zone de conversion dans le dispositif de séparation
- au moins deux pixels de démodulation formant une ouverture de diaphragme commune (82), **caractérisé en ce que**
- le dispositif de séparation présente une grille de dérive pour attirer les porteurs de charge provenant de la zone de conversion dans la zone de séparation et
- **en ce que** les pixels de démodulation formant une ouverture de diaphragme commune
- forment respectivement au moins une grille de dérive commune (72) et une grille de dérive individuelle attribuée (71), la grille de dérive individuelle attribuée 71 chevauche la grille de dérive commune, de manière séparée sur le plan électrique et la grille de dérive individuelle attribuée et la grille de dérive commune agissent comme une grille de dérive unique, un potentiel supérieur étant appliqué à la grille de dérive individuelle attribuée qu'à la grille de dérive commune, de sorte que les photo-électrons soient transmis de la grille de dérive commune à la grille de dérive individuelle attribuée.

2. Capteur de distance TOF selon la revendication 1,
caractérisé en ce
- l'ouverture de diaphragme commune forme une circonférence fermée.

3. Capteur de distance TOF selon une des revendications précédentes, **caractérisé en ce que**
- les pixels de démodulation présentent respectivement une zone de mesure électronique (90) et **en ce que**
- respectivement au moins deux pixels de démodulation forment une zone de mesure spatiale commune (91).

4. Capteur de distance TOF selon une des revendications précédentes, **caractérisé en ce que**
- respectivement quatre pixels de démodulation forment une ouverture de diaphragme commune et **en ce que**
- respectivement quatre pixels de démodulation forment une zone de mesure spatiale commune,
- de sorte que, notamment, les ouvertures de diaphragme et les zones de mesure forment un motif en damier.

5. Capteur de distance TOF selon une des revendications précédentes, **caractérisé en ce que**
- la zone de conversion (60) est formée à partir
- d'un substrat dopé (61),
- en particulier à partir d'un semi-conducteur à dopage n- et/ou
- une électrode arrière transparente (62)
- pour l'appauvrissement du substrat.

6. Capteur de distance TOF selon une des revendications précédentes, **caractérisé en ce que**
- le dispositif de séparation (70) présente
- au moins une grille de dérive (71)
- sur le côté supérieur du substrat (61)
- pour attirer les porteurs de charge (25) provenant de la zone de conversion (60) dans le dispositif de séparation (70) et/ou
- au moins une, en particulier deux grilles de modulation (73)
- sont disposées sur le côté supérieur du substrat
- en particulier en des points opposés de la grille de dérive
- pour le guidage alterné des porteurs de charge de façon correspondant à la fréquence de modulation de la grille de dérive vers les grilles de modulation et/ou
- au moins une, en particulier deux grilles de stockage (74)
- sont disposées sur le côté supérieur du substrat
- respectivement attribuées à une grille de modulation
- pour la collecte des porteurs de charge guidés vers la grille de modulation attribuée et/ou
- au moins une, en particulier deux grilles de transfert (75)
- sont disposées sur le côté supérieur du substrat
- respectivement attribuées à une grille de stockage
- pour le transfert de façon intermittente des porteurs de charge collectés sur les grilles de stockage au niveau de diffusions flottantes et/ou
- au moins une, en particulier deux diffusions flottantes (76)
- sont disposées dans le côté supérieur du substrat
- notamment sous la forme de puits à dopage n+
- respectivement attribuées à une grille de transfert
- pour la réception des porteurs de charge transmis depuis les grilles de transfert et
- pour l'alimentation de ceux-ci en guise de tension dans la zone de mesure
- en particulier, les grilles étant séparées du substrat par une couche non conductrice (77).

7. Capteur de distance TOF selon une des revendications précédentes, **caractérisé en ce que**
- le diaphragme (80) présente une couche intégrée dans le substrat,
- en particulier une couche pSub à dopage p+.

8. Capteur de distance TOF selon une des revendications précédentes, **caractérisé en ce que**
- une zone de mesure (90) est formée dans le pixel de démodulation, avec
- un suiveur de source,
- un commutateur de réinitialisation,
- un transistor de sélection.

9. Capteur de distance TOF selon une des revendications précédentes, **caractérisé en ce que**
- le dispositif de séparation forme un canal de conduite.

10. Capteur de distance TOF selon la revendication 6, **caractérisé en ce que**
- le dispositif de séparation forme un canal de conduite entre le diaphragme et la grille de modulation et/ou la grille de stockage et/ou la grille de transfert
- et **en ce que** le diaphragme est notamment formé par une couche intégrée dans le substrat.
